# EUROPÄISCHE PATENTANMELDUNG

(11) **EP 1 070 735 A1**
(43) Veröffentlichungstag der Anmeldung: **24.01.2001**
(21) Anmeldenummer: 00114076.3
(22) Anmeldetag: 07.07.2000
(51) Int. Cl.: C08J 3/12

(54) **Rieselfähige Elastomergranulate**

(30) Priorität: 20.07.1999 DE 19933152
(71) Anmelder: Bayer Aktiengesellschaft, 51368 Leverkusen (DE)
(72) Erfinder: Hoch, Martin, Dr., 42657 Solingen (DE); Jeblick, Werner, Dr., 51373 Leverkusen (DE); Meisenheimer, Hermann, Dr., 51069 Köln (DE); Gärtner, Maria, 51429 Bergisch-Gladbach (DE)

(57) **Zusammenfassung**

Die Erfindung betrifft ein Verfahren zur Herstellung von polaren, rieselfähigen Kautschukgranulaten mit Hilfe von an der Oberfläche hydrophobierten Pudermitteln.

## Beschreibung

Die Erfindung betrifft ein Verfahren zur Herstellung von polaren, rieselfähigen Kautschukgranulaten mit Hilfe von an der Oberfläche hydrophobierten Pudermitteln.

Die Bereitstellung von Elastomeren oder allgemein von Polymeren als Granulat ist sehr erwünscht, weil diese Lieferform die Weiterverarbeitung in kontinuierlichen arbeitenden Maschinen erlaubt. Meist sind so höhere Durchsätze zu erzielen. Bei vielen Verarbeitungsprozessen sind nur kontinuierliche Mischer (Extruder) vorhanden, so dass nur solche Rohstoffe verarbeitet werden können, die eine kontinuierliche Beschickung erlauben.

Um Elastomere für diese Verarbeitungsprozesse zur Verfügung stellen zu können, ist die Bereitstellung von Granulat erforderlich.

Es ergibt sich dabei das Problem, dass klebrige Polymere zwar zunächst mittels der bekannten Techniken granuliert werden können, dass jedoch das Granulat rasch wieder verklebt bzw. verblockt. Dieses Problem stellt sich insbesondere bei Elastomeren, die durch ihre vergleichsweise geringe oder nicht vorhandene Kristallinität und durch niedrige Glasübergangstemperaturen sowohl klebrig sind, wie auch einen kalten Fluss aufweisen können.

Typische Vertreter solcher Polymere sind Copolymerisate von Ethylen und Vinylacetat oder Ethylen und Acrylaten.

Stand der Technik bei der Granulatherstellung solcher Polymere ist es, nach oder während der Granulierung Pudermittel zuzusetzen, die die nachträgliche Verklebung vermeiden sollen. Solche Pudermittel sind meist anorganische Substanzen oder Mineralpulver wie Kieselsäuren, Talkum und verschiedene Silikate wie Wollastonit, Kaolinit oder Glimmer oder auch feingemahlene Thermoplasten wie PE. Dies ist z.B. in der EP-A-100 434 beschrieben.

EP 575 900 beschreibt den Einsatz von mikronisierten PE-Wachsen zum Entkleben von Polyisobutylen-Granulaten.

WO 93/23458 beschreibt den Einsatz von Anti-Stick-Mitteln für Ethylen-Acrylat-Copolymeren mit mindesten 50 % eingebautem Ethylen. Diese Mittel sind niedermolekularen Verbindungen mit bestimmten Schmelzpunkten.

Es ist auch möglich noch vor der Granulierung der Polymerschmelze bestimmte Trennmittel zuzusetzen, die nach der Granulierung an die Oberfläche wandern und dort einen Film bilden, der die Verklebung verhindert.

Diese Mittel werden typischerweise auch als slip-agents bei der Folienherstellung eingesetzt. Offenbar wirken diese Substanzen nur in einem engen Anwendungsbereich. US 45 10 281 (Re-issued 32325), EP 68 148 beansprucht z. B. den Einsatz von Ethylen-bis-oleylamid nur bis zu EVA Copolymeren mit einem VA-Gehalt von 55 %.

Allen diesen Dokumenten ist jedoch gemein, dass ausschließlich hydrophile oder unbehandelte Pudermittel eingesetzt werden.

Speziell polare Polymere stellen hohe Anforderungen an die Pudermittel, die durch den Stand der Technik nicht befriedigt werden. Die Nachteile der bekannten Pudermittel sind u.a. eine hohe Wasseraufnahme des Granulates, die hohen Mengen an Pudermittel, die für eine ausreichende Trennwirkung erforderlich sind (über 30 phr Pudermittel in EP-A-100 434) und im Falle organischer Pudermittel wie Ruß die dann nicht mehr mögliche Einfärbbarkeit. Polymere organischer Pudermittel wie auch Ruß haben das Problem der Staubexplosionsgefahr.

Die Gewährleistung einer Rieselfähigkeit ist bei EVA jedoch besonders dort ein Problem, wo der VA-Gehalt hoch liegt, also deutlich höher als 45 % bis zu 90 %.

Aufgabe war es also Pudermittel zu finden, die eine gute Wirksamkeit bei polaren Polymeren und Copolymeren aufweisen.

Eine weitere Aufgabe war, die Wasseraufnahme des gepuderten Granulates zu vermindern.

Eine weitere Aufgabe war, die Einfärbbarkeit der gepuderten polaren Polymeren zu verbessern bzw. zu gewährleisten.

Eine weitere Aufgabe war, Handhabungsprobleme infolge einer Staubexplosionsgefahr zu vermeiden.

Eine weitere Aufgabe war, Nachteile der im Stand der Technik bekannten Pudermittel zu vermeiden. Eine weitere Aufgabe war ein alternatives Verfahren zu den im Stand der Technik bekannten Verfahren zur Herstellung von rieselfähigen Granulaten bereitzustellen.

Die Aufgaben werden ganz oder überwiegend gelöst durch ein Verfahren zur Herstellung von rieselfähigem polarem Kautschukgranulat, dadurch gekennzeichnet, dass man ein an der Oberfläche hydrophobiertes Pudermittel einsetzt, gelöst.

Unter polaren Kautschuken werden Kautschuke mit polaren Wiederholeinheiten in der Polymerkette verstanden. Diese induzieren ein Dipolmoment in die Wiederholeinheiten. Typische polare Monomere sind Chloropren, Acrylnitril, Vinylchlorid, Vinylidenchlorid, Vinylfluorid, Acrylsäure und deren Analoga, wie Methacrylsäure, Methylmethacrylat, Vinylacetat, Acrylamid, Methacrylnitril, sowie Vinylpyrrolidon, Vinylcarbazol. Diese und weitere polare Monomere sind dem Fachmann gut bekannt. Häufig werden polare und unpolare Monomere zu polaren Kautschuken copolymerisiert. Hierfür geeignete unpolare Monomere sind z.B. α-Olefine, wie Ethylen, Propylen, Buten, Hexen, Octen, Diolefine, wie Butadien, Pentadien, Hexadien, Octadien, Methyloctadien oder Isopren. Weitere unpolare Co-Monomere sind dem Fachmann bekannt.

Bevorzugte polare Kautschuke sind Polychloropren, Acrylnitril-Butadien-Copolymere, Styrol-Acrylnitril-Butadien-Copolymere, Ethylen-Vinylacetat-Copolymere (wie LEVAPREN®) und Ethylen-Acrylat-Copolymere (wie VAMAC®) oder Mischungen aus diesen.

Die polaren Kautschuke werden in der Regel in unvernetzter oder teilvernetzter Form eingesetzt. Der Fachmann bezeichnet teilvernetzte Kautschuke auch als vorvulkanisiert, wobei der Vernetzungsgrad ausreichend gering ist, um die guten Verarbeitungseigenschaften nicht zu behindern.

Als Pudermittel eignen sich sämtliche partikelförmigen Materialien, die die Klebrigkeit der Kautschukpartikel herabsetzen oder ganz neutralisieren. Diese Materialien müssen bei der Lagertemperatur formstabil bleiben, insbesondere sollte der Schmelzpunkt oder Glasübergang oberhalb der Lagertemperatur liegen. Gleichzeitig dürfen die Pudermittel nicht nachteilig mit den Kautschukpartikeln während der weiteren Verarbeitung oder dem Endeinsatz des Kautschuks wechselwirken.

Pudermittel lassen sich generell in organische und mineralische Pudermittel einteilen. Im Rahmen dieser Erfindung sind die mineralischen bevorzugt, da organische Pudermittel unter ungünstigen Umständen zu Staubexplosionen führen können. Als organische Pudermittel kommen vor allem Polyolefin-Pulver, wie Polyethylen oder Polypropylen, und Ruß in Betracht.

Als mineralische Pudermittel kommen vor allem die dem Fachmann bekannten unverstärkenden und verstärkenden Füllstoffe in Betracht, wie Silica, insbesondere gefällte Kieselsäuren, Talkum, Tone, Mischsilicate, insbesondere aluminiumhaltige Silikate, Metalloxide, insbesondere ZnO, MgO und, gegebenenfalls gefällte, Carbonate, insbesondere Calciumcarbonate. Selbstverständlich können die genannten organischen und mineralischen Pudermittel auch in Gemischen eingesetzt werden.

Um die deutliche Verbesserung gegenüber dem Stand der Technik zu erzielen, müssen die Pudermittel an der Oberfläche hydrophobiert werden.

Verfahren zur Hydrophobierung von Füllstoffen sind dem Fachman aus dem Stand der Technik bekannt. Übliche und im Sinne der Erfindung geeignete Produkte sind beispielsweise gemäß den in US 4.514.213 und US 4.704.414 beschriebenen Verfahren zur Behandlung von insbesondere silikatischen Füllstoffen mit polysulfidischen Silylethern, insbesondere Bis-(triethoxysilylpropyl)tetrasulfid. Weiterhin geeignet sind die in US 2.736.669 und US 2.801.185 offenbarten Verfahren zur Behandlung von Kieselsäuren mit Alkoholen.

Hydrophobierte Füllstoffe, insbesondere hydrophobierte Kieselsäuren sind auch kommerziell erhältlich.

Geeignete Pudermittel sind partikelförmig und haben mittlere Teilchendurchmesser im Bereich von 2 bis 50 µm, insbesondere von 2 bis 20 µm, jeweils bezogen auf den sogenannten D50-Wert (ASTM C 690-1992, Multisizer 100 µm Kapillare).

Die notwendige Menge an hydrophobiertem Pudermittel liegt deutlich unter den für bekannte Pudermittel angegebenen Mengen von 30 bis 100 phr (EP-A-100 434). In der Regel genügen unter 10 phr oder noch weniger hydrophobierte Pudermittel. Die exakt notwendige Menge an hydrophobiertem Pudermittel richtet sich nach der beabsichtigten Lagertemperatur, der Größe der Kautschukpartikel, der inhärenten Klebrigkeit des Kautschuks und des beabsichtigten Verwendungszweckes des Kautschukgranulates. Mineralische Pudermittel sind bevorzugt, dass sie die Gefahr von Staubexplosionen verringern. Weiterhin ist selbstverständlich nicht nötig, dass alles vorhandene Pudermittel auf den Kautschukpartikeln lokalisiert ist. Häufig kann es vorteilhaft sein, den kalten Fluss der Kautschukpartikel mittels zusätzlichem freien Pudermittel zu kompensieren.

Für viele Anwendungen ist es vorteilhaft ein weißes oder einfärbbares Produkt zu benutzen. Aus diesem Grunde werden mineralische Pudermittel häufig gegenüber Ruß oder Polyolefinen, die schlecht einfärbbar sind, bevorzugt.

Zur Herstellung der Kautschukgranulate sind dem Fachmann zahlreiche Verfahren bekannt. An dieser Stelle wird auf die sogenannten Unterwasser-Granulationen verwiesen. Hierbei wird eine Schmelze des zu granulierenden Kautschuks durch eine Lochplatte gepresst und mit einem rotierenden Messer die Granulen abgeschlagen. Dies geschieht vorzugsweise unter Wasser, um die rasche Kühlung der Granulen zu gewährleisten und um ein Verkleben zu vermieiden.

Weiterhin geeignet ist der Einsatz eines Kautschukballens, der mit einem sogenannten Nieländer-Mischer (US 3.623.703) granuliert wird. Dieses Verfahren ist in EP--A2-100 434, S. 9 ff., beschrieben, auf die hiermit verwiesen wird. Bevorzugt wird bereits während des Granulierschrittes eine Teilmenge Pudermittel zugegeben.

Die Vorteile des beschriebenen Verfahrens sind hauptsächlich die deutlich verringerte nötige Pudermittelmenge, die den Einfluss auf spätere Verarbeitungsschritte minimiert. Es werden Kautschukgranulate mit verbesserter Rieselfähigkeit erzeugt. Diese Kautschukgranulate nehmen signifikant weniger Wasser auf als herkömmliche Granulate und eignen sich hervorragend für kontinuierliche Verarbeitung beispielsweise in Extrudern. Die erfindungsgemäßen Kautschukgranulate lassen sich leicht daran erkennen, dass sie in Wasser aufschwimmen.

Die erfindungsgemäßen Kautschukmischungen können selbstverständlich noch weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren wie Triethanolamin, Polyethylenglykol, Hexantriol, die in der Gummiindustrie bekannt und üblich sind. Die Kautschukhilfsmittel werden in üblichen Mengen zugemischt und richten sich nach dem jeweils beabsichtigten Verwendungszweck. Übliche Mengen sind beispielsweise Mengen von 0,1 bis 50 Gew.-%, bezogen auf die Gesamtmenge des eingesetzten Kautschuks.

Neben den zuvor erwähnten Kautschukhilfsprodukten können den erfindungsgemäßen Kautschukmischungen die bekannten Vernetzer zugegeben werden, wie Schwefel, Schwefelspender oder Peroxide. Darüber hinaus können die erfindungsgemäßen Kautschukmischungen Vulkanisationsbeschleuniger enthalten, wie Mercaptobenzthiazole, Mercaptosulfenamide, Guanidine, Thiurame, Dithiocarbamate, Thioharnstoffe und/oder Thiocarbonate. Die Vulkanisationsbeschleuniger und die erwähnten Vernetzer werden üblicherweise in Mengen von 0,1 bis 10 Gew.-%, bevorzugt 0,1 bis 5 Gew.-%, bezogen auf die Gesamtmenge des jeweils eingesetzten Kautschuks, eingesetzt. Diese vernetzbaren Kautschukmischungen sind ein weiterer Gegenstand der Erfindung.

Die Vulkanisation der erfindungsgemäßen Kautschukmischungen kann bei üblichen Temperaturen von 100 bis 200°C, bevorzugt 130 bis 180°C (gegebenenfalls unter Druck 10 bis 200 bar), erfolgen.

Die weitere Abmischung der Kautschuke mit den anderen erwähnten Kautschukhilfsprodukten, Vernetzern und Beschleunigern kann in üblicher Weise mit Hilfe von geeigneten Mischaggregaten, wie Walzen, Innenmischer und Mischextruder, durchgeführt werden.

Die erhaltenen Mischungen können ggf. auf übliche Weise compoundiert und vulkanisiert werden, wie beispielsweise näher in Encyclopedia of Polymer Science and Engineering, Vol. 4, S. 66 ff (Compoundierung) und Vol. 17, S. 666 ff (Vulkanisation) beschrieben wird. Bevorzugt werden zur Verbesserung der Hitze- und Lagerstabilität bekannte phenolische, aminische, schwefelhaltige oder phosphorhaltige Alterungsschutzmittel zugegeben. Diese sind z. B. in Ullmanns Enzyklopädie der technischen Chemie, Band 8, S. 19 ff näher beschrieben.

Die folgenden Beispiele dienen zur Veranschaulichung der Erfindung.

### Beispiele

Als polarer Kautschuk wurden verschiedene Ethylen-Vinylacetat-Copolymere, welche unter dem Markennamen Levapren® (Bayer AG) kommerziell erhältlich sind, untersucht.

Die verwendeten Produkte im einzelnen waren:
Levapren® 500 HV, ein Ethylen-Vinylacetat-Copolymer aus Produkt der Bayer AG mit einen Anteil von 50 % Vinylacetat,
Levapren® 600 HV, ein Ethylen-Vinylacetat-Copolymer aus Produkt der Bayer AG mit einen Anteil von 60 % Vinylacetat,
Levapren® 700 HV, ein Ethylen-Vinylacetat-Copolymer aus Produkt der Bayer AG mit einen Anteil von 70 % Vinylacetat,
   Als Pudermittel wurden eingesetzt:
Wessalon S, eine gefällte Kieselsäure der Fa. Degussa AG mit einem mittleren Durchmesser von 6 µm (D50-Wert) als hydrophiles Pudermittel
Talkum Luzenac Nr. 1 der Fa. Luzenac ebenfalls als Beispiel für ein hydrophiles Pudermittel mit einem mittleren Durchmesser von 15 µm (D50-Wert).
Sipernat D10, eine gefällte und hydrophob modifizerte Kieselsäure der Fa. Degussa AG mit einem mittleren Teilchendurchmesser von 5 µm (D50-Wert).
Sipernat D17, eine gefällte und hydrophob modifizerte Kieselsäure der Fa. Degussa AG mit einem mittleren Teilchendurchmesser von ca. 10 µm (D50-Wert).
Coatylene HA 1681, ein hydrophobes LDPE-Pulver der Fa. Herberts mit einem mittleren Teilchendurchmesser von 17 µm Schmelzpunkt 105°C.

Zur Untersuchung auf Rieselfähigkeit wurden die entsprechenden Produkte jeweils unmittelbar nach der Puderung dem Produktionsprozess entnommen und verschieden Pudermittel in einem einfachen Puvermischer zugesetzt. Es wurden jeweils 0,30 Gew.-% zugefügt. Die verwendeten Proben wurden als trockenes Granulat mit einer Größe von 4 mm eingesetzt und enthielten noch 0,1 % Talkum auf der Oberfläche, welches als Granulierhilfsmittel bei der Unterwasser-Granulierung eingesetzt wird.

Beschreibung der Produktionsbedingungen für Levapren (T, p, usw.) Ethylen-Vinylacetat-Copolymerisate mit dem Handelsnamen Levapren® werden nach einem Mitteldruck-Lösungsverfahren durch radikalische Polymerisation hergestellt. Nähere Angaben finden sich in EP 341 499, EP 307 755, EP 510 478 und EP 632 067.

Die eingesetzten Levaprentypen wurden wie oben beschrieben hergestellt, über Entgasungsstufen von Monomeren und Lösungsmittel befreit und die Schmelze durch die Löcher einer Extruderkopfplatte gepresst. Es wurde unter Wasser mit einem raschierenden Messer zu ca. 3 m großen Pellets granuliert. Das Wasser enthielt ca. 2 % Talkum als Granulierhilfsmittel und wurde auch als Transportmedium für das Granulat verwendet. Das Wasser wurde abgeschleudert, die Granulen im Luftstrom getrocknet und dann jeweils verschiedene Pudermittel nachgesetzt.

Die Rieselfähigkeit wurde untersucht, indem jeweils 300 g Granulat in Kunststoffzylinder von 10 cm Durchmesser und einer bewegliche Bodenplatte gefüllt und mit einem Gewicht von 5 kg belastet wurden. Nach Lagerung über einen bestimmten Zeitraum bei bestimmten Temperaturen wurden das Gewicht und die Bodenplatte entfernt und die Menge Granulat bestimmt, die frei herausfiel.

### Beispiel 1

Levapren 500 HV wurde wie oben beschrieben mit verschiedenen Pudermitteln versetzt, 6 Tage bei 40 °C gelagert und anschließend die Rieselfähigkeit bestimmt. Das Granulat mit Wessalon S und mit Talkum war deutlich verblockt und konnte erst nach kräftigem Schütteln und schließlich Herauskratzen per Hand aus dem Prüfzylinder entfernt werde. Die beiden anderen Proben fielen unverblockt aus dem Zylinder und waren demnach noch rieselfähig.

| Wessalon S | Talkum | Sipernat D10 | Sipernat D17 |
|---|---|---|---|
| | | | |

| nach einer Minute | | | |
|---|---|---|---|
| 10 % frei fließend | 50 % frei fließend | zu 100 % frei fließend | frei fließend, einige Granulen verblockt |
| 90 % verblockt | 50 % verblockt | | |

### Beispiel 2

Levapren 600 HV wurde wie oben beschrieben mit verschiedenen Pudermitteln versetzt, 3 Tage bei 40°C gelagert und die Rieselfähigkeit bestimmt.

| Wessalon S | Talkum | Sipernat D10 | Sipernat D17 |
|---|---|---|---|
| | | | |

| nach einer Minute: | | | |
|---|---|---|---|
| nicht gefallen | nicht gefallen | zu 100 % frei fließend | 80 % frei fließend |

| nach drei Minuten: | | | |
|---|---|---|---|
| nach Schütteln rieselfähig, jedoch teilweise verblockt | nach Schütteln rieselfähig, jedoch teilweise verblockt | zu 100 % frei fließend | zu 100 % frei fließend |

### Beispiel 3

Levapren 600 HV wurde wie oben beschrieben mit verschiedenen Pudermitteln versetzt, 5 Tage bei 40°C gelagert und die Rieselfähigkeit bestimmt.

| Wessalon S | Talkum | Sipernat D10 | Sipernat D17 |
|---|---|---|---|
| | | | |

| sofort: | | | |
|---|---|---|---|
| nicht gefallen | 10 % frei fließend | zu 100 % frei fließend | 90% frei fließend |

| nach drei Minuten: | | | |
|---|---|---|---|
| stark verblockt | nach Schütteln rieselfähig, jedoch teilweise verblockt | frei fließend | frei fließend |

Die Probe mit Wessalon fiel als zusammenhängender Block. Die Probe mit Talkum fiel nach kräftigem Schütteln aus dem Zylinder. Die Proben mit den Sipernat-Pudermitteln waren frei rieselfähig. Die Probe mit Sipernat D10 fiel etwas rascher aus dem Zylinder.

### Beispiel 4

Levapren 700 HV wurde wie oben beschrieben mit verschiedenen Pudermitteln versetzt, 4 Tage bei 40°C gelagert und die Rieselfähigkeit bestimmt.

| Wessalon S | Talkum | Sipernat D10 | Sipernat D17 |
|---|---|---|---|
| | | | |

| sofort: | | | |
|---|---|---|---|
| nicht gefallen | wie Wessalon S | zu 80 % frei fließend | 100 % frei fliebend |

| nach drei Minuten: | | | |
|---|---|---|---|
| stark verblockt, nach starkem Schütteln teilweise rieselfähig | wie Wessalon S | frei fließend | frei fließend |

Die mit Wessalon S und mit Talkum gepuderten Proben waren deutlich verblockt. Die Proben mit den Sipernat-Pudermitteln blieben rieselfähig. Die Probe mit Sipernat D10 fiel etwas rascher aus dem Zylinder.

### Beispiel 5 (Vergleich - analog EP-A-068 148)

Bei der Fertigung von Levapren 600 HV wurde Ethylen-bis-oleylamid in die Aufarbeitungsschnecke dosiert, wobei zur einfacheren Dosierung zunächst eine Lösung in Vinylacetet einer Konzentration von 5 % angesetzt wurde. Die Menge des Ethylenbis-oleylamids wurde so bemessen, dass das Endprodukt 4000 bis 5000 ppm enthielt.

Das Produkt wurde unter Wasser granuliert und in 25-kg-Säcke verpackt und auf Paletten gestapelt. Diese Paletten wurden 3 Monate bei RT gelagert und das Ausmaß der Verblockung beobachtet.

Hierzu wurden die Paletten umgepackt und der Grad der Verblockung anhand der untersten - also am stärksten belasteten Sacklage - beurteilt. Die Säcke waren teilweise verblockt und nicht mehr frei rieselfähig.

### Beispiel 6

25 kg von Levapren 700 HV wurden mit 0,25 phr Wessalon S gepudert. Weitere 25 kg wurden zusätzlich mit Coatylene 1681 gepudert und beide Proben in Polyethylensäcke gefüllt, in Karton abgepackt und beide in einen Wärmeschränk bei 40°C für 14 Tage gelagert.

Die mit Wessalon S gepuderte Ware war vollständig verbacken und konnte nicht mehr weiterverarbeitet werden.

Die nachgepuderte Ware war rieselfähig geblieben und war damit geeignet für die weitere Verarbeitung.

### Beispiel 7

Wasseraufnahme der Pudermittel:
Wessalon S hatte Wassergehalte von 4 bis 5 %, gemessen als Trocknungsverlust nach 2 h bei 105°C.
Sipernat D17 hatte einen Wassergehalt von 2 % gemessen als Trocknungsverlust nach 2 h bei 105°C.

Weiterhin vorteilhaft sind hydrophobierte Pudermittel, weil diese in Gegenwart von Feuchtigkeit nicht agglomerieren. Pudermittelagglomerate können bei Anwendung in dünnen Schichten zu Stör- und Fehlstellen führen.

## Patentansprüche

1. Verfahren zur Herstellung von rieselfähigem polarem Kautschukgranulat, dadurch gekennzeichnet, dass man ein an der Oberfläche hydrophobiertes Pudermittel einsetzt.

2. Verfahren gemäß Anspruch 1, dadurch gekennzeichnet, dass man mineralische an der Oberfläche hydrophobierte Pudermittel einsetzt.

3. Verfahren gemäß einem oder mehreren der Ansprüche 1 bis 2, dadurch gekennzeichnet, dass man den polaren Kautschuk aus der Gruppe Polychloropren, Acrylnitril-Butadienpolymere, Styrol-Acrylnitril-Butadien-Copolymere, Ethylen-Vinylacetat-Copolymere, Ethylen-Acrylat-Copolymere oder einem Gemisch aus zwei oder mehreren der genannten Polymere auswählt.

4. Rieselfähige polare Kautschukgranulate mit einer niedrigen Wasseraufnahme enthaltend hydrophobierte Pudermittel.

5. Verwendung des Kautschukgranulates gemäß Anspruch 4 zur Herstellung von vernetzungsfähigen Kautschukmischungen.

6. Vernetzungsfähige Kautschukmischungen enthaltend Kautschukgranulate gemäß Anspruch 4.
